# EUROPEAN PATENT APPLICATION

(11) **EP 2 765 527 A2**
(43) Date of publication of application: **13.08.2014**
(21) Application number: 14154193.8
(22) Date of filing: 06.02.2014
(51) Int. Cl.: G06F 17/30

(54) **Searching method**

(30) Priority: 08.02.2013 GB 201302284
(71) Applicant: Tomorrows Medicines Limited, Daresbury Cheshire WA4 4FS (GB)
(72) Inventor: Nolan, Christopher John, Burwood, Victoria 3125 (AU)
(74) Representative: Williams, Michael David

(57) **Abstract**

A computer implemented method for searching first data, the first data comprising a plurality of items, each item having a respective associated location. The method comprises receiving a search request comprising a search criteria and an indication of a first location. The method further comprises, for each of a plurality of regions, searching the first data for items having an associated location within that region, each of the regions being defined relative to the first location and having an associated size, and outputting a subset of the items, wherein each of the items within the subset has an associated location within a smallest one of the plurality of regions for which a number of items having an associated location within that region meets a predetermined criteria.

## Description

### Introduction

The present invention relates to methods and apparatus for searching data having associated location data, and has particular, though not exclusive, advantage for searching data relating to clinical trials.

The increasing ubiquity of the Internet and proliferation of connected devices, mean that much information that was once laborious to obtain may now be obtained relatively easily. One area in which this is the case is that of clinical trials. Clinical trials are carried out during drug development and medical research to determine whether a potential medical intervention is efficacious and safe. The intervention being tested is performed on healthy volunteers and/or patients. Patients may discover a clinical trial by recommendation by a treating physician, or through their own research. Healthy volunteers may respond to advertisements, or enquire with one of the many organisations that operate clinical trials. The Internet provides prospective participants with access to large, and increasing, quantities of information regarding proposed or current clinical trials.

Indeed, the extent of information can, itself, present a barrier to the determination of which of the potentially many clinical trials a participant may be eligible. While existing methods provide the ability to search for prospective clinical trials, the large number of clinical trials operating in many countries is such that identifying which clinical trials are relevant can be arduous and time consuming.

### Summary

It is an object of at least one embodiment of the present invention to obviate or mitigate one or more of the problems encountered in the prior art, whether identified herein or elsewhere.

According to a first aspect of the present invention, there is provided a computer implemented method for searching first data, the first data comprising a plurality of items and each item having a respective associated location. The method comprises receiving a search request comprising an indication of a first location; for each of a plurality of regions, searching the first data for items having an associated location within that region, each of the regions being defined relative to the first location and having an associated size; and outputting a subset of the items, wherein each of the items within the subset has an associated location within a smallest one of the plurality of regions for which a number of items having an associated location within that region meets a predetermined criteria.

In this way, the first aspect of the invention outputs only particularly relevant items by outputting those items which fall within the smallest region that contains items meeting the predetermined criteria. For example, the predetermined criteria may define a numerical range within which the number of items falls. In this way, the first aspect of the invention only outputs a number of items within the numerical range, those items having an associated location within a smallest one of the regions searched. As a further example, where the region is centred on the location indicated in the search request, the method outputs only a number of items within the numerical range which are closest to the location defined within the search request. The size of each region may be defined in any appropriate quantities. For example, the size may be an area, a volume or another quantity. In some embodiments the size of each area may be defined by a time or a time period. The size may be defined in terms of a combination of quantities.

The number of items may be a total number of items having an associated location within that region. Alternatively, the search request may further comprise a search criteria. The subset may comprise all of the items within the plurality of items that match the search criteria and have an associated location within a smallest one of the plurality of regions for which a number of items matching the search criteria and having an associated location within that region meets a predetermined criteria. For example, where the items in the first data relate to clinical trials, the search criteria may specify criteria relating to clinical trials. For example, one or more criteria such as conditions with which the clinical trial is concerned, a type of clinical trial, a stage of clinical trial, a genetic status or type required for participation in the trial, previous treatment requirements for participants in the trial, a time-since-previous-treatment requirement for participants in the trial, an age requirement for participation in the trial, and an other diseases requirement for participation in the trial (e.g. the presence or absence of particular other diseases) may be specified in the search request. Of course, the first data may relate to data in any domain (not only clinical trial data) and any criteria may be specified.

Where a search criteria is received, the search criteria may not restrict the items which may be returned. Put another way, the search criteria may be null, or the search may be considered not to have any search criteria other than the indication of the first location.

Searching for items having associated location data within a plurality of regions may comprise searching for items having associated location data within a first region, determining that a number of items within the first region does not meet the predetermined criteria, and searching for items having associated location data within a second region having a different size to the first region. In this way, the size of the regions may be dynamically updated to reflect the results of previous searches.

The method may further comprise, if a number of items within the first region exceeds an upper bound of the numerical range, selecting a second region smaller than the first region. Similarly, if a number of items within the first region is below a lower bound of the numerical range, the method may further comprise selecting a second region larger than the first region.

The second region may be a larger or smaller than the first region by a predetermined amount. Alternatively, the method may further comprise determining an amount by which the number of items within the first region exceeds an upper bound of the numerical range or is below a lower bound of the numerical range, and selecting a size of the second region in dependence upon the amount. Different methods of selecting the size of the second region may be applied in different circumstances, and may be applied depending, for example, on the search criteria.

Searching for items having associated location data within a plurality of regions may comprise searching for items having associated location data within regions of iteratively decreasing size while a number of items having an associated location within a most recently searched region exceeds an upper bound of the numerical range. Similarly, the method may comprise searching for items having associated location data within regions of iteratively increasing size while a number of items having an associated location within a most recently searched region is below a lower bound of the numerical range.

The method may further comprise ending the searching if a second criteria is met. For example, the second criteria may comprise one or more of a search being performed for a maximum region size, a search being performed for a minimum region size, and a maximum number of searches being performed.

Each of the regions may contain the first location. Each of the regions may be centred on the first location. Alternatively, each of the regions may be defined differently with respect to the first location. Each of the regions may be circular, or may be any other shape.

The predetermined criteria may be selected in dependence upon a second criteria. For example, the second criteria may be the search criteria.

Each of the items may represent a clinical trial. The search criteria may indicate a medical condition and the predetermined criteria may be selected based upon the medical condition. For example, the predetermined criteria may be different depending upon the medical condition that is specified in the search criteria.

According to a second aspect of the present invention, there is provided a computer program comprising computer readable instructions configured to cause a computer to carry out a method according to the first aspect.

According to a third aspect of the present invention, there is provided a non-transitory computer readable medium carrying a computer program according to the second aspect.

According to a fourth aspect of the present invention, there is provided a computer apparatus for searching first data, the first data comprising a plurality of items, each item having a respective associated location, the computer apparatus comprising: a memory storing processor readable instructions; and a processor arranged to read and execute instructions stored in the memory; wherein the processor readable instructions comprise instructions arranged to control the computer to carry out a method according to the first aspect.

According to a fifth aspect of the present invention, there is provided an apparatus for searching first data, the first data comprising a plurality of items, each item having a respective associated location, the apparatus comprising: means for receiving a search request comprising an indication of a first location; means for searching the first data for items having an associated location within a plurality of regions, each of the regions being defined relative to the first location and having an associated size; and means for outputting a subset of the items, wherein the associated location of each of the items within the subset may be within a smallest one of the plurality of regions for which a number of items having an associated location within that region meets a predetermined criteria.

According to a sixth aspect of the present invention, there is provided a computer implemented method for searching first data, the first data comprising a plurality of items, each item having a respective associated location, the method comprising: receiving a search request comprising an indication of a first location; searching the first data for items having an associated location within a first region of a first size defined relative to the first location; if it is determined that a number of items having an associated location within the first region is within an predetermined range of an acceptable number of items, outputting search results indicating the items within the first region; if it is determined that a number of items having an associated location within the first region is greater than an upper bound of the predetermined range, searching the first items having an associated location within a second region defined relative to the first location and smaller than the first region; and if it is determined that a number of items having an associated location within the first region is less than a lower bound of the predetermined range, searching the first items having an associated location within a third region defined relative to the first location and larger than the first region.

It will be appreciated that aspects of the present invention can be implemented in any convenient way including by way of suitable hardware and/or software. For example, a device arranged to implement the invention may be created using appropriate hardware components. Alternatively, a programmable device may be programmed to implement embodiments of the invention. The invention therefore also provides suitable computer programs for implementing aspects of the invention. Such computer programs can be carried on suitable carrier media including tangible carrier media (e.g. hard disks, CD ROMs and so on) and intangible carrier media such as communications signals.

One or more aspects of the invention may, where appropriate to one skilled in the art, be combined with any one or more other aspects described herein, and/or with any one or more features described herein.

### Brief Description of the Drawings

Embodiments of the present invention are now described, by way of example only, with reference to the accompanying drawings, in which:
Figure 1 is a schematic illustration of a network of communicating devices that can be used to implement embodiments of the present invention;
Figure 2 is a schematic illustration of components of a server of Figure 1;
Figure 3 is a schematic illustration of tables of a database of Figure 1; and
Figure 4 is flowchart showing processing carried out by a server of Figure 1 in accordance with an embodiment of the present invention.

### Detailed Description

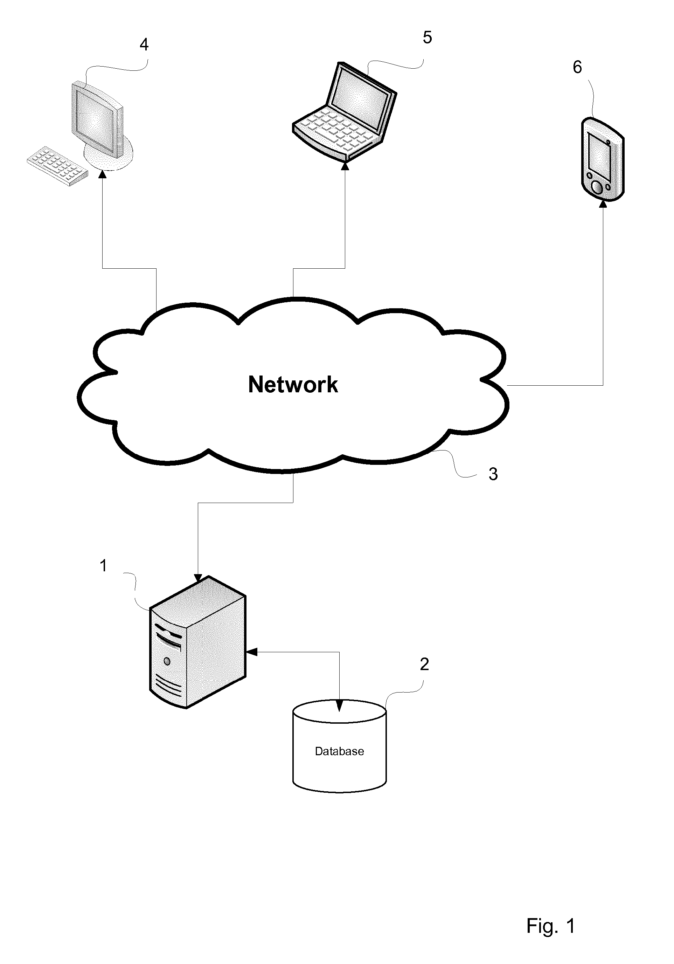

In Figure 1 there is illustrated a network of computing devices that can be used to implement embodiments of the present invention. A server 1 is adapted to provide applications to client computers over a network. The server 1 connects to, and is configured to read data from and write data to, a database 2. The server 1 is also connected to a network 3 via which it can communicate with client devices 4, 5 and 6. In more detail, the server 1 is adapted to provide a searching application to the client devices 4, 5, 6. In some embodiments, the application allows users of the client devices 4, 5, 6 to search for information relating to clinical trials.

The network 3 may be any suitable public or private network and may be, for example, the Internet. The connections between the server 1 and the client devices 4, 5, 6 and the network 3 may take any appropriate form and may be wired or wireless connections. While illustrated as a desktop computer, a laptop computer and a mobile telephone/PDA respectively, the client devices 4, 5 6 may take any appropriate form. It will be appreciated that while three client devices 4, 5, 6 are illustrated, this is merely exemplary and that any number of client devices may be used.

Referring to Figure 1 there is shown an exemplary schematic illustration of components which can be used to implement the server 1 in accordance with some embodiments of the present invention. It can be seen that the server 1 comprises a CPU 1 a which is configured to read and execute instructions stored in a volatile memory 1 b which takes the form of a random access memory. The volatile memory 1b stores instructions for execution by the CPU 1a and data used by those instructions. For example, the instructions used to provide searching applications to the client devices 4, 5 6 may be loaded into and stored in the volatile memory 1 b.

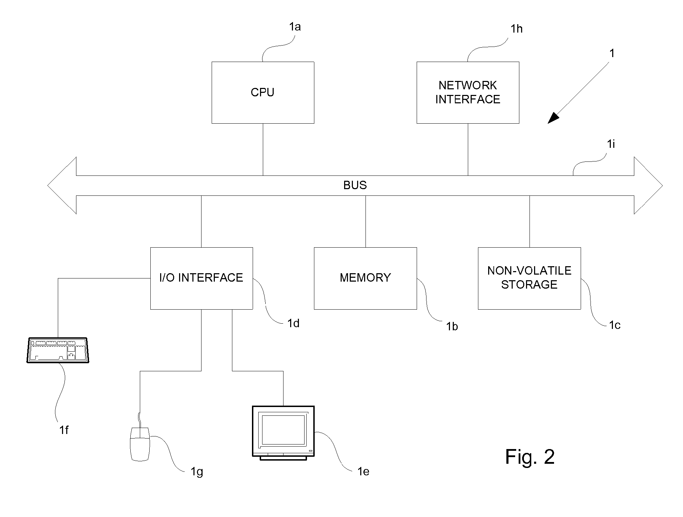

The server 1 further comprises non-volatile storage 1c, shown in the form of a hard disc drive, although it will be appreciated that any other form of non-volatile storage may be used in the configuration of Figure 2. Computer readable instructions for causing the server 1 to provide searching applications to the client devices 4, 5, 6 may be stored in the non-volatile storage 1c. The server 1 further comprises an I/O interface 1d to which are connected peripheral devices used in connection with the server 1. More particularly, a display 1 e is configured so as to display output from the server 1. Input devices are also connected to the I/O interface 1d. Such input devices include a keyboard 1f and a mouse 1g which allow user interaction with the server 1. A network interface 1h allows the server 1 to be connected to appropriate computer networks, such as the network 3, so as to receive and transmit data from and to other computing devices such as the client devices 4, 5, 6. The CPU 1a, volatile memory 1b, non-volatile storage 1 e, I/O interface 1 d, and network interface 1 h, are connected together by a bus 1 i.

It will be appreciated that the arrangement of components illustrated in Figure 2 is merely exemplary, and that the server 1 may comprise additional, fewer, or entirely different components than those illustrated in Figure 2. Indeed, the server 1 may comprise a plurality of computers, similar to, or arranged differently from, the server 1. For example, the server 1 may comprise a plurality of computers respectively adapted to provide, *inter alia,* a web server, an application server, a gateway server and a database server etc to provide searching applications to the client devices 4, 5, 6 over the network 3. That is, it is to be understood that the server 1 may be implemented using any appropriate configuration as will be readily appreciated by those skilled in the art. It will also be appreciated that the client devices 4, 5, 6 may each comprise computers implemented similarly to the server 1, or again using any appropriate configuration.

There is now described an embodiment of the present invention in which the database 2 is arranged to store data relating to clinical trials, and in which the server 1 is adapted to provide an application to facilitate the searching of the data stored in the database 2. From the description set out below, however, it will be readily apparent to the skilled person that, while particularly beneficial, the searching of clinical trial data represents only one application of the present invention, which is more broadly applicable.

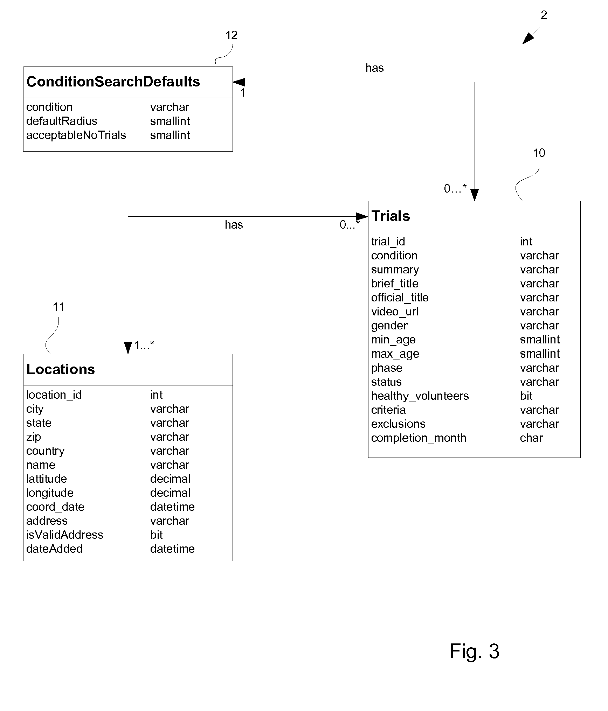

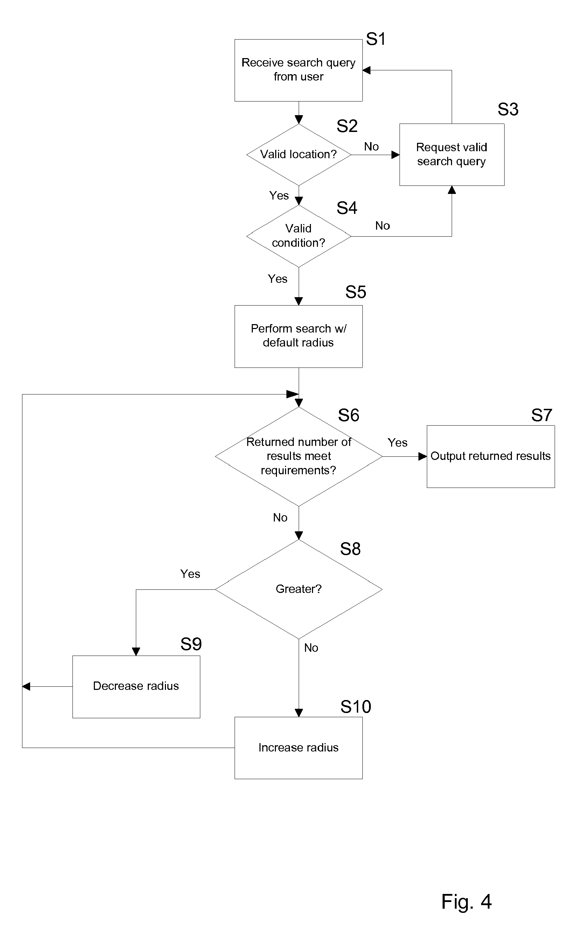

Referring to Figure 3, there is schematically illustrated tables of the database 2 that may be used to store data relating to clinical trials. A Trials table 10 stores records relating to a plurality of clinical trials, each record in the Trials table 10 representing a respective clinical trial. Each clinical trial recorded in the Trials table 10 has one or more corresponding records in a Locations table 11. Conversely each location, recorded in the location table has zero or more corresponding entries in the Trials table 10. Each record in the Locations table 10 indicates a respective unique location at which a clinical trial can take place. Each entry in the Trials table 10 additionally has a single corresponding record in a ConditionSearchDefaults table 12. Conversely, each entry in the ConditionSearchDefaults table 12 may have zero or more corresponding records in the Trials table 10. Each record of the ConditionSearchDefaults table 12 represents a particular medical condition for which a clinical trial may be undertaken and additionally specifies default search settings for the medical condition to which the record pertains. The use of the default search settings is described in further detail below with reference to Figure 4.

As described above, the Trials table 10 comprises a record for each clinical trial stored in the database 2. To this end, the Trials table 10 comprises a plurality of fields for representing clinical trials within the database 2. For example, a trial_id field uniquely identifies each clinical trial within the database 2. A condition field indicates a medical condition with which the clinical trial is concerned and a summary field provides a textual description of the clinical trial (for example, remit and aims). A gender, min_age and a max_age field record respectively a gender, minimum and maximum age requirement for participants in the clinical trial, and a healthy_volunteers field indicates whether the clinical trial is to be conducted on healthy volunteers. A criteria field records criteria that must be met for participation in the clinical trial, while an exclusions field records characteristics that would prohibit participation in the clinical trial. A completion_month field records the month in which the clinical trial is to complete.

Each record in the Locations table 10 comprises a location_id field uniquely identifying the location record within the database 2. City, state, zip and country, latitude and longitude fields record those details for each location record. An address field records a freeform address which may included details not included in the categories of city, state, zip, country, lattitude or longitude. An isValidAddress records whether the address is a valid address, and a dateAdded field records the date on which the address was added to the database 2.

Each record in the ConditionSearchDefaults table 12 comprises a condition field indicating the medical condition to which the record pertains, a defaultRadius field and an acceptableNoTrials field, the use of each of which is described in more detail below with reference to Figure 4. In general terms, however, the defaultRadius field specifies a radius that is used to define an area, centered on a location specified in a search query. The acceptableNoTrials field of each record defines a desired number of search results to be returned by the application in response to in searches for a condition to which the record pertains.

It is to be appreciated that the tables shown in Figure 4 are merely exemplary. Additionally, in the interests of clarity, only a subsection of tables, and fields within those tables, are shown in Figure 4 and described herein. It will be appreciated, however, that the tables 10 to 12 may comprise additional fields, and that database 2 may comprise additional tables. For example, the database 2 may comprise additional tables for storing and managing user information where the searching application allows or requires users to create user accounts. Further while data types of fields within the tables 10 to 12 are shown in Figure 4, it is to be understood that any appropriate data types may be used may be used.

With reference to Figure 4, there is now described processing carried out by the server 1 to process a search query received from one of the client devices 4, 5, 6. At step S1, a search query is received. The search query received at step S1 comprises information indicating a location for which the search is to be performed. For example, the location received at step S1 may indicate a location of residence of a user of the application. For a clinical trial searching application, it may be preferable for the location data received in the search query at step S1 to be of a relatively fine granularity. For example, it may be preferable for the location data received with the search query at step S1 to indicate a postal code/zip code, a town, or a city, rather than a more coarse-grained indication of location such as county, state, country or continent. It will be appreciated that the location data may be provided in a number of ways. For example, the location data may be input by a user of the search application using a user interface provided on a client device 4, 5, 6. As a further example, a client device from which a user accesses the search application may comprise location sensors such as GPS receiver (not shown), and may be adapted to provide location data to the search application automatically.

Processing passes from step S1 to step S2, at which it is determined whether a valid location has been provided in the search query. If it is determined that a valid location has not been provided, processing passes to step S3, at which an appropriate error message is displayed requesting a valid search query. Processing passes from step S3 to step S1. If, on the other hand, it is determined at step S2 that a valid location has been provided, processing passes to step S4, at which it is determined whether a valid medical condition was provided in the search query received at step S1. For example, at step S4, a search may be performed of the records in the ConditionsSearchDefaults list to determine whether the medical condition specified in the search query received at step S1 is a medical condition that is contained within the database 2. Alternatively, a search may be conducted on a separate list of known medical conditions (not shown). In some embodiments of the invention, medical conditions for which users can search may be presented to users as a closed list (such as a drop-down list), such that the processing of step S4 is not required.

If it is determined at step S4 that a valid medical condition not has been provided in the search query received at step S1, processing passes to step S3. If, on the other hand, it is determined at step S4 that the search query does provide a valid medical condition, processing passes to step S5. In other embodiments of the present invention, the search query received at step S1 may specify criteria in addition to, and/or in place of, a particular medical condition. In some embodiments of the invention, the search query may request clinical trials requiring healthy volunteers without specifying a particular medical condition. As a further example, where the items in the first data relate to clinical trials, the search criteria may specify any criteria relating to clinical trials. For example, one or more criteria such as conditions with which the clinical trial is concerned, a type of clinical trial, a stage of clinical trial, a genetic status or type required for participation in the trial, previous treatment requirements for participants in the trial, a time-since-previous-treatment requirement for participants in the trial, an age requirement for participation in the trial, and an other diseases requirement for participation in the trial (e.g. the presence or absence of particular other diseases) may be specified in the search request. Indeed, it will be appreciated that in some embodiments of the present invention, the search query received at step S1 may specify as search criteria, any criteria which may be used to query the database 2 or an external source of data.

At step S5 a search is performed based upon the search query received at step S1. In more detail, the database 2 is queried to locate clinical trials which have a location within a region centered at the location provided in the search query and having a radius defined by the value of the defaultRadius field of the record of the ConditionSearchDefaults table 12 matching the medical condition specified in the search query. Processing passes from step S5 to step S6 at which it is determined whether the number of results returned from the query of step S5 meets a predetermined requirement. In the presently described embodiment, it is determined at step S6 whether the number of returned results is within an acceptable range of the value defining an acceptable number of trials, stored in the acceptableNoTrials field of the record matching the medical condition specified in the search query received at step S1.

If it is determined at step S6 that the number of returned results is within the acceptable range of the acceptable number of trials for the searched medical condition, processing passes to step S7 at which the returned results are output to the user of the application. If, on the other hand, it is determined that the number of results returned at step S5 is not within the acceptable range the acceptable number of trials for the searched medical condition, processing passes from step S6 to step S8. That is, if the number of returned results is above the upper bounds of the acceptable range, or is below the lower bounds of the acceptable range, processing passes to step S8. At step S8, it is determined whether the number of returned results within the default radius is greater than the upper bounds of the acceptable range for the searched medical condition.

If it is determined that the number of returned results within the default radius is greater than the upper bounds of the acceptable range for the searched medical condition, processing passes to step S9, at which the search radius is decreased. The search radius may be decreased in a number of ways. For example, the search radius may be decreased by a predetermined set amount. Alternatively, the search radius may be decreased by an amount proportional to the number of results returned for the default search radius. That is, the amount by which the search radius is decreased may increase as the amount by which the number of results exceeds the upper bounds of the acceptable range increases. Processing passes from step S9 back to step S6, at which it is determined whether the number of returned results for the decreased search radius is within an acceptable range of the acceptable number of trials defined in the acceptableNoTrials field for the record of the ConditionSearchDefaults table 12 for the searched condition.

If, on the other hand, it is determined at step S8 that the returned number of results is below the lower bounds of the acceptable range of the acceptable number of trials, processing passes from step S8 to step S10 at which the search radius is increased. Again, the search radius may be increased in a number of ways, including, for example, by a set amount, or in proportion to the amount by which the number of returned results is below the lower bounds of the acceptable range. Processing passes from step S10 to step S6, at which it is determined whether the number of returned results within the increased search radius is within an acceptable range of the acceptable number of trial results as defined by the acceptableNoTrialResults field of the record of the ConditionSearchDefaults table 12 corresponding to the searched medical condition.

By way of the processing of Figure 4, the number of clinical trials presented to the user is dynamically optimized based on the location provided with the search query and the availability of appropriate clinical trials within increasing or decreasing regions centered on that location. In particular, the processing of Figure 4 ensures that the user is not presented with an unmanageable quantity of search results he need to review an unmanageable number of search results, nor with a dearth of search results. Rather the user is shown a number of search results that is appropriate both to their defined location and to the medical condition for which the have searched.

It will be appreciated that the number of returned results may never converge to a number within an acceptable range. For example, where one or more locations near to the location defined in the search request host a large number of clinical trials matching a user's search criteria, decreasing the search radius may not result in a corresponding decrease in the number of results returned. Similarly, there may be an insufficient number of clinical trials world-wide for a particular medical condition. The latter scenario may be alleviated by appropriate configuration and updating of the acceptableNoTrials field corresponding to various conditions. Additionally, limits may be placed on one or both of the decrease and increase operations performed at steps S9 and S10 respectively. For example, a count of the number of times the radius has been adjusted may be maintained, and an upper limit of this count enforced. In this way, once the number of radius updates reaches the upper limit, the results for the current radius may be output. Additionally, or alternatively, in some embodiments a maximum radius and a minimum radius may be set. These may be set in any appropriate way. For example, maximum and minimum radii may be set for particular medical conditions using an appropriate field of the ConditionSearchDefaults table 12. Alternatively, global (i.e. applying to all medical conditions) maiximum and minimum radii may be set. In some embodiments, users may be define maximum or minimum radii manually as part of the search criteria.

It was described with reference to Figure 3 that the Locations table 11 provides a validAddress field. Where an address is marked as invalid, that address may not be returnable using the processing of Figure 4, as it may not be possible to determine whether the address falls within any particular region. As such, in some embodiments, trials which have corresponding "invalid" location, may be returned separately to allow further research by a user of the application.

It will also be appreciated that while in the example embodiment described above, i.e. searching for clinical trials, it may be beneficial for a location specified in a search query relatively precise, for some embodiments of the invention, the location defined in the search query may be broader. For example, the defined location may be a country, planet or galaxy, etc. The default radius may therefore be beneficially configured in dependence upon the location precision expected to be received in the search query. In some embodiments of the invention, a precision of location may be determined, and a default radius chosen in dependence upon the determined precision.

It will be appreciated that embodiments described above are merely exemplary and that modifications may be made to the embodiments described above without departing from the spirit or scope of the appended claims.

## Claims

1. A computer implemented method for searching first data, said first data comprising a plurality of items, each item having a respective associated location, the method comprising:
receiving a search request comprising an indication of a first location;
for each of a plurality of regions, searching said first data for items having an associated location within that region, each of said regions being defined relative to said first location and having an associated size; and
outputting a subset of said items, wherein each of the items within said subset has an associated location within a smallest one of said plurality of regions for which a number of items having an associated location within that region meets a predetermined criteria.

2. A computer implemented method according to claim 1, wherein said search request further comprises a search criteria, and wherein the subset comprises each of said plurality of items which matches said search criteria and has an associated location within a smallest one of said plurality of regions for which a number of items matching said search criteria and having an associated location within that region meets a predetermined criteria.

3. A computer implemented method according to claim 1 or 2, wherein said predetermined criteria defines a numerical range within which said number of items falls.

4. A computer implemented method according to claim 1, 2 or 3, wherein searching for items having associated location data within a plurality of regions comprises:
searching for items having associated location data within a first region;
determining that a number of items within said first region does not meet said predetermined criteria; and
searching for items having associated location data within a second region having a different size to said first region.

5. A method according to claim 4 as dependent on claim 3, further comprising:
if a number of items within said first region exceeds an upper bound of said range selecting a second region smaller than said first region; and
if a number of items within said first region is below a lower bound of said range selecting a second region larger than said first region.

6. A method according to claim 4 or 5, wherein said second region is a larger or smaller than said first region by a predetermined amount.

7. A computer implemented method according to claim 4 or 5 as dependent on claim 3, further comprising:
determining an amount by which said number of items within said first region exceeds an upper bound of said range or is beneath a lower bound of said range; and
selecting a size of said second region in dependence upon said amount.

8. A computer implemented method according to any preceding claim, wherein searching for items having associated location data within a plurality of regions comprises:
searching for items having associated location data within regions of iteratively decreasing size while a number of items having an associated location within a most recently searched region exceeds an upper bound of said range; and
searching for items having associated location data within regions of iteratively increasing size while a number of items having an associated location within a most recently searched region is below a lower bound of said range.

9. A computer implemented method according to claim 8, further comprising ending said searching if a second criteria is met;
wherein said second criteria optionally comprises one or more of a search being performed for a maximum region size, a search being performed for a minimum region size, and a maximum number of searches being performed.

10. A computer implemented method according to any preceding claim, wherein each of said regions is centred on said first location.

11. A computer implemented method according to any preceding claim, wherein said predetermined criteria is selected in dependence upon a second criteria.

12. A computer implemented method according to claim 11 as dependent on claim 2, wherein said second criteria is said search criteria.

13. A computer implemented method according to claim 11 as dependent on claim 2, wherein said search criteria indicates a medical condition and said predetermined criteria is selected based upon said medical condition.

14. A computer program comprising computer readable instructions configured to cause a computer to carry out a method according to any preceding claim.

15. An apparatus for searching first data, said first data comprising a plurality of items, each item having a respective associated location, the apparatus comprising:
means for receiving a search request comprising an indication of a first location;
means for searching said first data for items having an associated location within a plurality of regions, each of said regions being defined relative to said first location and having an associated size; and
means for outputting a subset of said items, wherein the associated location of each of the items within said subset is within a smallest one of said plurality of regions for which a number of items having an associated location within that region meets a predetermined criteria.
